# EUROPÄISCHE PATENTSCHRIFT

(11) **EP 1 724 092 B1**
(45) Veröffentlichungstag und Bekanntmachung des Hinweises auf die Patenterteilung: **26.11.2008**
(21) Anmeldenummer: 06005252.9
(22) Anmeldetag: 15.03.2006
(51) Int. Cl.: B29C 45/73

(54) **Werkzeug zur Urformung eines hohlen Formlings aus Kunststoff**
Mold to produce a hollow part in plastic
Moule pour fabriquer une pièce creuse en plastique

(30) Priorität: 20.05.2005 DE 202005008170 U
(43) Veröffentlichungstag der Anmeldung: 22.11.2006
(73) Patentinhaber: gwk Gesellschaft Wärme Kältetechnik mbH, 58566 Kierspe (DE)
(72) Erfinder: Zeppenfeld, Reinhard, Dipl.-Ing., 58566 Kierspe (DE)
(74) Vertreter: Köchling, Conrad-Joachim

(56) Entgegenhaltungen:
- WO-A-02/22341
- DE-A1- 3 828 383
- US-A- 5 498 150
- US-A- 6 079 972

## Beschreibung

Die Erfindung betrifft Werkzeug zur Urformung eines hohlen, patronenförmigen Formlings aus Kunststoff mit einem äußeren Formwerkzeugteil und einem inneren Formwerkzeugteil, wobei zwischen den Werkzeugteilen die Kavität zur Formung des Formlings gebildet ist, sowie einem in das als Hohlkörper ausgebildete innere Werkzeugteil eingesetzten Kühlrohr, welches mit Abstand von der Wandung des inneren Werkzeugteils positioniert ist, sodass durch das Kühlrohr ein Kühlmittelablauf- oder ein Kühlmittelzulaufkanal und durch den Ringkanal zwischen Kühlrohr und der Wandung des inneren Werkzeugteils ein Kühlmittelzulaufkanal oder ein Kühlmittelablaufkanal gebildet ist, wobei zwischen dem Außenmantel des Kühlrohres und der Wandung des inneren Werkzeugteiles erste Längsrippen ausgebildet sind, die gleichmäßig auf den Umfang verteilt angeordnet sind, die eine Stützverbindung zwischen den beiden Teilen bilden.

Solche Werkzeuge werden zum Urformen von Pressformteilen verwendet, die nachfolgend zu einer Flaschenform aufgeblasen und umgeformt werden. Um eine schnelle Abkühlung des Formlings nach dessen Formung in der Kavität zwischen innerem und äußerem Werkzeugteil zu erreichen, wird im Stand der Technik mittels eines Kühlrohres Kühlmittel, beispielsweise Wasser, in das innere Werkzeugteil eingepresst, welches durch den Ringkanal zwischen Kühlrohr und Wandung des inneren Werkzeugteiles abfließen kann. Auf diese Weise wird eine relativ schnelle Kühlung des Formlings erreicht, so dass die Fertigungsgeschwindigkeit des Formlings relativ groß ist.

Die Fertigungszeit ist im Wesentlichen durch die Kühlung des Formlings bedingt.

Ein gattungsgemäßes Werkzeug ist aus der US-A-5498150 bekannt. Hierbei sind die Längsrippen an der Wandung des inneren Werkzeugteils angeformt und stützen sich mit ihren Enden am Kühlrohr ab.

Eine ähnliche Ausbildung ist aus der US-A-6079972 bekannt. Aus der DE 3828383 A1 ist ein Spritzgusswerkzeug bekannt, bei dem im Innenraum eines Kühlmittelkanals Rippen vorgesehen sind, die zur Vergrößerung der Kühlfläche dienen, wobei diese Rippen sich nicht an dem Kühlmittelrohr abstützen.

Ausgehend von diesem Stand der Technik liegt der Erfindung die Aufgabe zugrunde, ein Werkzeug gattungsgemäßer Art zu schaffen, mit dem bei Anwendung einfacher konstruktiver Maßnahmen eine höhere Abkühlungsgeschwindigkeit des Formlings erreicht werden kann.

Zur Lösung dieser Aufgabe schlägt die Erfindung vor, dass vier erste Längsrippen als Stützrippen zwischen Kühlrohr und innerem Werkzeugteil ausgebildet sind,
dass die Wandung des inneren Werkzeugteils dünnwandig ausgebildet ist,
dass an der Wandung des inneren Werkzeugteils gleichmäßig auf den Umfang verteilt, zweite Längsrippen vorgesehen sind, die mit radialem Abstand vom Kühlrohr enden, und
dass zwischen jeweils zwei in Umfangsrichtung benachbarten als Stützrippen ausgebildeten ersten Längsrippen mehrere zweite Längsrippen vorgesehen sind, die am inneren Werkzeugteil ausgebildet sind und mit radialem Abstand vom Kühlrohr enden.

Bei dieser Anordnung wird einerseits durch die entsprechenden Längsrippen eine zusätzliche Wärmeabfuhr vom inneren Werkzeugteil und damit vom Formling erreicht, wobei zudem eine Stützung des
inneren Werkzeugteils durch die Stützrippen und das Kühlrohr erfolgt, so dass beim Spritzvorgang des Formlings einer Verformung des inneren Werkzeugteils entgegengewirkt wird.

Durch die erfindungsgemäße Anordnung des relativ stabilen Innenrohres und die als Stützrippen dienenden ersten Längsrippen zwischen Kühlrohr und innerem Werkzeugteil ist es möglich, die Wandstärke des inneren Werkzeugteils zu minimieren. Aus dieser geringen Wandstärke resultiert wiederum eine vorzügliche schnelle Wärmeabfuhr beim Kühlvorgang über das durchströmende Kühlmedium, wobei trotz der dünnwandigen Ausbildung des inneren Werkzeugteils beim Spritzvorgang eine unerwünschte Verformung des inneren Werkzeugteils unterbunden ist, weil das dünnwandige innere Werkzeugteil sich über die als Stützrippen dienenden Längsrippen auf dem stabilen Kühlrohr abstützt. Durch die zweiten Längsrippen, die mit radialem Abstand von dem Kühlrohr enden, wird eine Vielzahl von zusätzlichen Wärmeabfuhrelementen am inneren Werkzeugteil gebildet, über welche mittels des Kühlmittels eine schnelle Wärmeabfuhr vom inneren Werkzeugteil und damit vom Formling erfolgen kann.

Durch die erfindungsgemäße Ausbildung wird eine gleichmäßige Abstützung und eine vorzügliche Kühlung realisierbar.

Bevorzugt ist dabei vorgesehen, dass die Wandstärke des inneren Werkzeugteils minimal 1,5 mm beträgt.

Eine unter Umständen bevorzugte Ausbildung wird darin gesehen, dass die Längsrippen parallel zur Mittelachse des Kühlrohres und des inneren Werkzeugteils ausgerichtet sind.

Eine solche Ausbildung ist relativ einfach zu fertigen und aus diesem Grunde vorteilhaft.

Eine Alternative hierzu wird darin gesehen, dass die Längsrippen gewendelt verlaufen, wobei sie über die Länge des Kühlrohres beziehungsweise die Länge des inneren Werkzeugteils vorzugsweise nur einen um 360° verlaufenden Gang bilden.

Eine solche Ausbildung ist zwar in der Fertigung etwas komplizierter, jedoch wird hiermit unter Umständen eine noch bessere Kühlung und/oder Abstützung erreicht.

Um die gewünschte Wärmeabfuhr zu fördern, ist zudem vorgesehen, dass alle Längsrippen aus gut wärmeleitendem Werkstoff bestehen, insbesondere an das innere Werkzeugteil angeformt sind.

Zudem kann vorgesehen sein, dass das Kühlrohr aus schlecht wärmeleitendem Werkstoff besteht. Hierdurch wird ein unerwünschter Wärmeaustausch zwischen dem Vorlauf und dem Rücklauf des Kühlmediums gemindert.

Eine konkrete und bevorzugte Ausgestaltung der Erfindung wird darin gesehen, dass das innere Werkzeugteil einen langen zylindrischen Bereich aufweist, an den als Boden eine halbkugelförmige Kappe angeschlossen ist, wobei das Kühlrohr im Übergang des zylindrischen Bereichs zur Kappe offen ausmündet und wobei die Längsrippen des inneren Werkzeugteils, mindestens die nicht als Stützrippen dienenden Längsrippen, strahlenförmig bis zum Zentrum der Kappe verlaufen.

Ein Ausführungsbeispiel der Erfindung ist in der Zeichnung dargestellt und im Folgenden näher beschrieben. Es zeigt:
- Figur 1: wesentliche Bestandteile eines Werkzeuges zur Urformung eines Formlings im Mittellängsschnitt gesehen;
- Figur 2: wesentliche Bestandteile des Werkzeuges im Querschnitt gesehen.

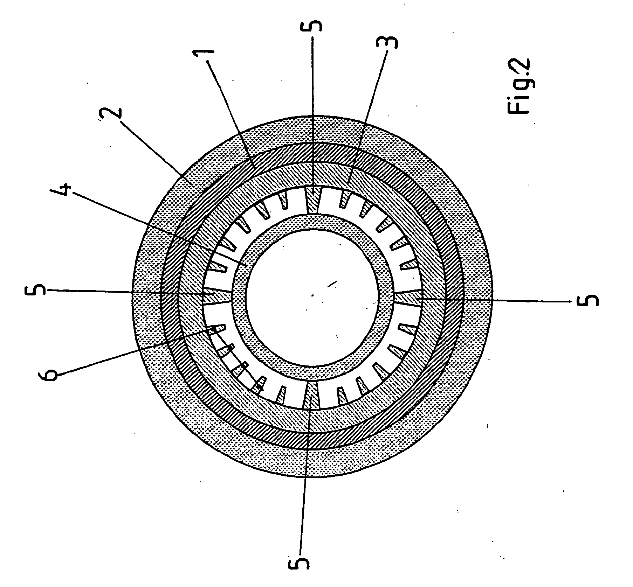

In der Zeichnung ist streng vereinfacht ein Werkzeug zur Urformung eines hohlen, patronenförmigen Formlings 1 gezeigt. Der Formling ist ein so genanntes Preformteil, aus welchem in einem nachfolgenden Blasvorgang eine übliche Getränkeflasche geformt wird. Der Formling ist im Prinzip patronenförmig geformt mit einem zylindrischen Hohlteil und einem halbkugeligen Ende, wobei mündungsnah am Formling 1 ein Stützring und Gewindegänge angeformt sind. Das Werkzeug besteht aus einem äußeren Formwerkzeugteil 2 (gegebenenfalls mehrteilig) und einem inneren Formwerkzeugteil 3. Zwischen diesen beiden Formwerkzeugteilen 2, 3 ist die Kavität zur Formung des Formlings 1 gebildet. In das als Hohlkörper ausgebildete innere Werkzeugteil 3 ist ein Kühlrohr 4 eingesetzt, welches mit Abstand von der Wandung des inneren Werkzeugteils 3 positioniert ist, so dass durch das Kühlrohr 4 entsprechend den angegebenen Pfeilen Kühlmittel zugeführt und durch den Ringkanal zwischen Kühlrohr 4 und der Wandung des inneren Werkzeugteils 3 abgeführt werden kann. Sie Strömungsrichtung kann auch umgekehrt sein. Durch dieses Kühlmittel soll das innere Werkzeugteil 3 und darüber insbesondere der Formling 1 schnell gekühlt werden. Um die Kühlwirkung zu verbessern, ist, wie in Figur 2 dargestellt, zwischen dem Außenmantel des Kühlrohres 4 und der Wandung des inneren Werkzeugteils 3 eine Anordnung von Längsrippen vorgesehen, die zu diversen Zwecken vorgesehen sind, wie es noch nachfolgend beschrieben wird.

Zwischen dem Außenmantel des Kühlrohres 4 und der Wandung des inneren Werkzeugteils 3 sind erste Längsrippen 5 gleichmäßig auf den Umfang verteilt angeordnet, die eine Stützverbindung zwischen den beiden Teilen bilden. Im Ausführungsbeispiel sind vier solcher Längsrippen 5 als Stützrippen zwischen Kühlrohr 4 und innerem Werkzeugteil 3 ausgebildet. Diese Stützrippen dienen insbesondere auch dazu, Kräfte aufzunehmen, die während des Spritzvorganges auf das innere Werkzeugteil 3 einwirken. Aufgrund der Anordnung dieser ersten Stützrippen 5 in Verbindung mit dem Kühlrohr 4 ist es möglich, die Wandstärke des inneren Werkzeugteils 3 zu minimieren, so dass beispielsweise eine Wandstärke von 1,5 mm ermöglicht ist, ohne dass das Werkzeug beim Spritzvorgang Schaden nimmt.

Im Ausführungsbeispiel sind zusätzlich an der Wandung des inneren Werkzeugteils 3 gleichmäßig auf den Umfang verteilt zweite Längsrippen 6 vorgesehen, die mit radialem Abstand vom Kühlrohr 4 enden. Im Ausführungsbeispiel sind jeweils zwischen 2 in Umfangsrichtung benachbarten als Stützrippen ausgebildeten ersten Längsrippen 5 fünf zweite Längsrippen 6 vorgesehen, die als Kühlrippen dienen. Auch diese führen zudem zu einer Erhöhung der Biegestätigkeit des Werkzeugteils 3. Im Ausführungsbeispiel sind sämtliche Längsrippen 5 beziehungsweise 6 parallel zur Mittelachse des Kühlrohres 4 und zur Mittelachse des inneren Werkzeugteils 3 ausgerichtet. Gegebenenfalls könnten solche Längsrippen aber auch gewendelt verlaufen, sofern hierdurch eine noch bessere Kühlwirkung erreicht wird. Alle Längsrippen 5, 6 bestehen aus gut wärmeleitendem Werkstoff und sind vorzugsweise an das innere Werkzeugteil 3 angeformt. Das Kühlrohr 4 besteht aus schlecht wärmeleitendem Werkstoff.

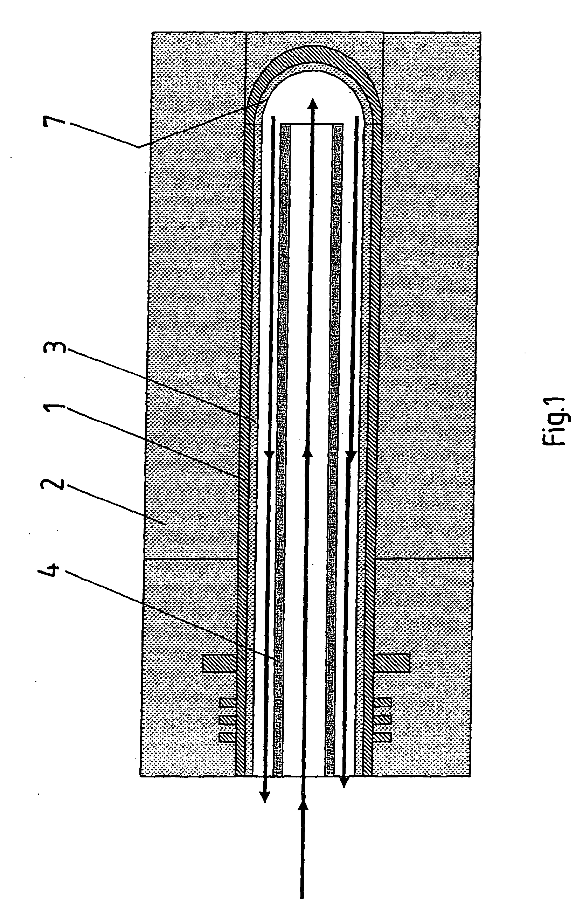

Das Kühlrohr 4 besteht vorzugsweise aus einem Werkstoff mit hoher Festigkeit, um die Stützwirkung zu maximieren. Auch kann das Kühlrohr 4 dickwandig ausgebildet sein, um den Wärmeaustausch zu minimieren und die Festigkeit zu maximieren. Wie insbesondere aus der Darstellung gemäß Figur 1 ersichtlich, weist das innere Werkzeugteil 3 einen langen zylindrischen Bereich auf, an den als Boden eine halbkugelförmige Kappe 7 anschließt. Das Kühlrohr 4 endet im Bereich des Übergangs vom zylindrischen Bereich und der Kappe 7. Die Längsrippen 5, 6 können vorzugsweise strahlenförmig bis zum Zentrum der Kappe 7 verlaufen.

Die Erfindung stellt mit einfachen Maßnahmen eine konstruktive Lösung zur Verfügung, mit der erheblich höhere Abkühlgeschwindigkeiten bezüglich des Formlings 1 erreicht werden können, wobei die verbesserte und schnellere Kühlung durch die Rippen 5, 6 und durch die Minderung der Wandstärke des inneren Werkzeugteils 3 realisiert werden kann.

Neben dem Vorteil der schnelleren Abkühlung ist ein weiterer Vorteil, dass durch die effizientere Wärmeabfuhr durch verminderte Wandstärke des Werkzeugteils 3 und die vergrößerte Oberfläche der Kühlmediumdurchfluss vermindert werden kann bei gleicher Abkühlung oder schnellerer Abkühlung, so dass der Anlagenaufwand und der spezifische Energieaufwand reduziert werden kann.

Die Erfindung ist nicht auf das Ausführungsbeispiel beschränkt, sondern im Rahmen der Offenbarung vielfach variabel.

## Patentansprüche

1. Werkzeug zur Urformung eines hohlen, patronenförmigen Formlings (1) aus Kunststoff mit einem äußeren Formwerkzeugteil (2) und einem inneren Formwerkzeugteil (3), wobei zwischen den Werkzeugteilen (2, 3) die Kavität zur Formung des Formlings (1) gebildet ist, sowie einem in das als Hohlkörper ausgebildete innere Werkzeugteil (3) eingesetzten Kühlrohr (4), welches mit Abstand von der Wandung des inneren Werkzeugteils (3) positioniert ist, sodass durch das Kühlrohr (4) ein Kühlmittelablauf- oder ein Kühlmittelzulaufkanal und durch den Ringkanal zwischen Kühlrohr (4) und der Wandung des inneren Werkzeugteils (3) ein Kühlmittelzulaufkanal oder ein Kühlmittelablaufkanal gebildet ist, wobei zwischen dem Außenmantel des Kühlrohres (4) und der Wandung des inneren Werkzeugteiles (3) erste Längsrippen (5) ausgebildet sind, die gleichmäßig auf den Umfang verteilt angeordnet sind, die eine Stützverbindung zwischen den beiden Teilen bilden,
wobei vier erste Längsrippen (5) als Stützrippen zwischen Kühlrohr (4) und innerem Werkzeugteil (3) ausgebildet sind,
und die Wandung des inneren Werkzeugteils (3) dünnwandig ausgebildet ist, **dadurch gekennzeichnet, dass** an der Wandung des inneren Werkzeugteils (3) gleichmäßig auf den Umfang verteilt, zweite Längsrippen (6) vorgesehen sind, die mit radialem Abstand vom Kühlrohr (4) enden, und
**dass** zwischen jeweils zwei in Umfangsrichtung benachbarten als Stützrippen ausgebildeten ersten Längsrippen (5) mehrere zweite Längsrippen (6) vorgesehen sind, die am inneren Werkzeugteil (3) ausgebildet sind und mit radialem Abstand vom Kühlrohr (4) enden.

2. Werkzeug nach Anspruch 1, **dadurch gekennzeichnet, dass** die Wandstärke des inneren Werkzeugteils (3) minimal 1,5 mm beträgt.

3. Werkzeug nach einem der Ansprüche 1 oder 2, **dadurch gekennzeichnet, dass** die Längsrippen (5, 6) parallel zur Mittelachse des Kühlrohres (4) und des inneren Werkzeugteils (3) ausgerichtet sind.

4. Werkzeug nach einem der Ansprüche 1 bis 3, **dadurch gekennzeichnet, dass** die Längsrippen (5, 6) gewendelt verlaufen, wobei sie über die Länge des Kühlrohres (4) beziehungsweise die Länge des inneren Werkzeugteils (3) vorzugsweise nur einen um 360° verlaufenden Gang bilden.

5. Werkzeug nach einem der Ansprüche 1 bis 4, **dadurch gekennzeichnet, dass** alle Längsrippen (5, 6) aus gut wärmeleitendem Werkstoff bestehen, insbesondere an das innere Werkzeugteil (3) angeformt sind.

6. Werkzeug nach einem der Ansprüche 1 bis 5, **dadurch gekennzeichnet, dass** das Kühlrohr (4) aus schlecht wärmeleitendem Werkstoff besteht.

7. Werkzeug nach einem der Ansprüche 1 bis 6, **dadurch gekennzeichnet, dass** das innere Werkzeugteil (3) einen langen zylindrischen Bereich aufweist, an den als Boden eine halbkugelförmige Kappe (7) angeschlossen ist, wobei das Kühlrohr (4) im Übergang des zylindrischen Bereichs zur Kappe (7) offen ausmündet und wobei die Längsrippen (5, 6) des inneren Werkzeugteils (3), mindestens die nicht als Stützrippen dienenden zweiten Längsrippen (6), strahlenförmig bis zum Zentrum der Kappe (7) verlaufen.

## Claims

1. Mould for shaping a hollow, cartridge-shaped preform (1) made from plastic, comprising an outer mould part (2) and an inner mould part (3), wherein the cavity for shaping the preform (1) is formed between the mould parts (2, 3), and also a cooling tube (4) which is placed inside the inner mould part (3) designed as a hollow body and which is positioned at a distance from the wall of the inner mould part (3) so that a coolant discharge channel or a coolant supply channel is formed by the cooling tube (4) and a coolant supply channel or a coolant discharge channel is formed by the annular channel between the cooling tube (4) and the wall of the inner mould part (3), wherein first longitudinal ribs (5) are formed between the outer jacket of the cooling tube (4) and the wall of the inner mould part (3), which first longitudinal ribs are uniformly distributed around the circumference and form a supporting connection between the two parts, wherein four first longitudinal ribs (5) are designed as supporting ribs between the cooling tube (4) and the inner mould part (3) and the wall of the inner mould part (3) is of thin-walled design, **characterised in that** second longitudinal ribs (6) are provided on the wall of the inner mould part (3), which second longitudinal ribs are uniformly distributed around the circumference and end at a radial distance from the cooling tube (4), and **in that** a plurality of second longitudinal ribs (6) are provided between in each case two first longitudinal ribs (5) designed as supporting ribs and located adjacent to one another in the circumferential direction, which second longitudinal ribs are formed on the inner mould part (3) and end at a radial distance from the cooling tube (4).

2. Mould according to claim 1, **characterised in that** the wall thickness of the inner mould part (3) is a minimum of 1.5 mm.

3. Mould according to one of claims 1 or 2, **characterised in that** the longitudinal ribs (5, 6) are oriented parallel to the centre axis of the cooling tube (4) and of the inner mould part (3).

4. Mould according to one of claims 1 to 3, **characterised in that** the longitudinal ribs (5, 6) run in a spiral manner, wherein they form preferably just one turn of 360° over the length of the cooling tube (4) or the length of the inner mould part (3).

5. Mould according to one of claims 1 to 4, **characterised in that** all the longitudinal ribs (5, 6) are made from a material with high thermal conductivity, in particular are integrally formed on the inner mould part (3).

6. Mould according to one of claims 1 to 5, **characterised in that** the cooling tube (4) is made from a material with low thermal conductivity.

7. Mould according to one of claims 1 to 6, **characterised in that** the inner mould part (3) comprises a long cylindrical region, to which a semispherical cap (7) is connected as the base, wherein the cooling tube (4) opens at the transition between the cylindrical region and the cap (7), and wherein the longitudinal ribs (5, 6) of the inner mould part (3), at least the second longitudinal ribs (6) which do not serve as supporting ribs, run in a sunray-like manner towards the centre of the cap (7).

## Revendications

1. Outil pour former une pièce moulée (1) creuse en plastique en forme de cartouche comprenant une partie d'outil de mise en forme extérieure (2) et une partie d'outil de mise en forme intérieure (3), la cavité permettant de former la pièce moulée (1) étant formée entre les parties d'outil (2, 3), ainsi qu'un tube de refroidissement (4) introduit dans la partie d'outil intérieure (3) réalisée comme un corps creux, lequel tube de refroidissement est positionné à distance de la paroi de la partie d'outil intérieure (3), de sorte qu'un canal d'évacuation ou d'arrivée de liquide de refroidissement soit formé par le tube de refroidissement (4) et qu'un canal d'arrivée de liquide de refroidissement ou un canal d'évacuation de liquide de refroidissement soit formé par le canal annulaire entre le tube de refroidissement (4) et la paroi de la partie d'outil intérieure (3), des premières nervures longitudinales (5) étant réalisées entre l'enveloppe extérieure du tube de refroidissement (4) et la paroi de la partie d'outil intérieure (3), lesquelles sont disposées de manière répartie régulièrement sur la circonférence et forment un raccord de soutien entre les deux parties, quatre premières nervures longitudinales (5) étant réalisées comme des nervures de soutien entre le tube de refroidissement (4) et la partie d'outil intérieure (3) et la paroi de la partie d'outil intérieure (3) étant réalisée à la manière d'une paroi mince, **caractérisé en ce que** des secondes nervures longitudinales (6) sont prévues sur la paroi de la partie d'outil intérieure (3) de manière répartie régulièrement sur la circonférence, lesquelles nervures se terminent à une distance radiale du tube de refroidissement (4), et **en ce que**, entre respectivement deux premières nervures longitudinales (5) réalisées comme des nervures de soutien et voisines dans la direction circonférentielle, plusieurs secondes nervures longitudinales (6) sont prévues, lesquelles sont réalisées sur la partie d'outil intérieure (3) et se terminent à une distance radiale du tube de refroidissement (4).

2. Outil selon la revendication 1, **caractérisé en ce que** l'épaisseur de paroi de la partie d'outil intérieure (3) s'élève à au moins 1,5 mm.

3. Outil selon l'une quelconque des revendications 1 ou 2, **caractérisé en ce que** les nervures longitudinales (5, 6) sont orientées de manière parallèle par rapport à l'axe central du tube de refroidissement (4) et de la partie d'outil intérieure (3).

4. Outil selon l'une quelconque des revendications 1 à 3, **caractérisé en ce que** les nervures longitudinales (5, 6) s'étendent en couronne en formant de préférence uniquement un passage s'étendant sur 360 ° sur la longueur du tube de refroidissement (4) et/ou sur la longueur de la partie d'outil intérieure (3).

5. Outil selon l'une quelconque des revendications 1 à 4, **caractérisé en ce que** toutes les nervures longitudinales (5, 6) sont constituées d'un matériau conducteur thermique de bonne qualité et sont en particulier formées sur la partie d'outil intérieure (3).

6. Outil selon l'une quelconque des revendications 1 à 5, **caractérisé en ce que** le tube de refroidissement (4) se compose d'un matériau conducteur thermique de mauvaise qualité.

7. Outil selon l'une quelconque des revendications 1 à 6, **caractérisé en ce que** la partie d'outil intérieure (3) présente une longue zone cylindrique, à laquelle est rattachée une coiffe (7) en forme de demi-sphère en tant que fond, le tube de refroidissement (4) débouchant dans le passage de la zone cylindrique de manière ouverte vers la coiffe (7) et les nervures longitudinales (5, 6) de la partie d'outil intérieure (3), au moins les secondes nervures longitudinales (6) ne servant pas de nervures de soutien, s'étendant sous forme de rayons jusqu'au centre de la coiffe (7).
